(19) **Europäisches Patentamt European Patent Office Office européen des brevets**

(11) **EP 4 711 771 A1**

(12) **EUROPEAN PATENT APPLICATION**

(43) Date of publication:
18.03.2026 Bulletin 2026/12

(21) Application number: 25197369.9

(22) Date of filing: 21.08.2025

(51) International Patent Classification (IPC):
$G01P\ 15/08^{(2006.01)}$    $G01P\ 15/18^{(2013.01)}$
$G01P\ 1/12^{(2006.01)}$    $G01P\ 15/04^{(2006.01)}$
$G06F\ 11/30^{(2006.01)}$

(52) Cooperative Patent Classification (CPC):
**G01P 15/0891;** G01P 1/127; G01P 15/04;
G01P 15/18; G06F 11/3058

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 11.09.2024 US 202418882646

(71) Applicant: **STMicroelectronics International N.V. 1228 Plan-les-Ouates, Geneva (CH)**

(72) Inventors:
• **RIVOLTA, Stefano Paolo**
  **20832 DESIO (MB) (IT)**
• **ARRIGONI, Piergiorgio**
  **28845 DOMODOSSOLA (VB) (IT)**

(74) Representative: **Studio Torta S.p.A.**
**Via Viotti, 9**
**10121 Torino (IT)**

(54) **DETECTING AND CHARACTERIZING IMPACTS USING SATURATION DATA OF A LOW-G ACCELEROMETER**

(57) Techniques for detecting and characterizing impacts using saturation data of a low-g accelerometer are disclosed. A system for detecting impacts using a low-g accelerometer includes an accelerometer, one or more memory devices, and a processor. An acceleration measurement of an axis of the accelerometer that indicates that the axis is saturated is obtained. A direction of acceleration in the axis is obtained based on the acceleration measurement. A saturation period for the axis is determined. A determination of whether the saturation period satisfies a duration threshold is made. In response to the saturation period satisfying the duration threshold, an impact is detected and a record of the detected impact based on the direction of acceleration is stored in the one or more memory devices.

FIG. 3

## Description

**Technical Field**

The present disclosure relates generally to detecting and characterizing impacts, and more particularly to detecting and characterizing impacts based on saturation data obtained from a low-g accelerometer.

**BRIEF SUMMARY**

Techniques for detecting and characterizing impacts using a low-g accelerometer are disclosed. An impact is detected when the low-g accelerometer is saturated *(i.e.,* it measures a maximum measurable acceleration such as 8 g or 16 g) for more than a threshold duration. This allows low-g accelerometers, which are low-cost and low-power, to be used to economically detect and characterize impacts involving accelerations too high to be directly measured using the low-g accelerometer.

The invention is set out in the annexed claims.

**BRIEF DESCRIPTION OF THE SEVERAL VIEWS OF THE DRAWINGS**

Figure 1 illustrates a use-case diagram showing always-on impact detection in an electronic device using saturation data of a low-g accelerometer according to some embodiments.

Figure 2 illustrates an acceleration curve as measured by a low-g accelerometer for detecting and characterizing an impact using saturation data of the low-g accelerometer according to some embodiments.

Figure 3 illustrates a logical flow diagram of a process used to detect impacts using saturation data of a low-g accelerometer according to some embodiments.

Figure 4a illustrates a logical flow diagram of a process used to detect a direction of an object when an impact is detected using saturation data of a low-g accelerometer according to some embodiments.

Figure 4b illustrates a logical flow diagram of a process used to detect an orientation of an object when a detected impact ends according to some embodiments.

Figure 5 illustrates a system diagram showing an example computing system for implementing embodiments described herein.

**DETAILED DESCRIPTION**

Electronic devices and other objects are often subjected to impacts: phones are dropped, laptops fall off tables, and cameras are mishandled in baggage or during shipment. Many of these impacts cause serious damage, necessitating repair or replacement of the device.

Unfortunately, many such electronic devices do not include a way to detect or characterize impacts. For example, it is uncommon for laptops to include an inertial measurement unit usable to obtain information about impacts to the laptop. Manufacturers, retailers, or other entities associated with the device therefore have no reliable way of determining whether damage to the electronic device is caused by an impact, or characteristics of such an impact.

This lack of information about impacts to electronic devices hinders repair and handling of electronic devices. For example, manufacturers repair damage caused by impacts that are not covered under warranty, unable to prove that the damage was caused by a user dropping the device. Users handle delicate devices roughly, unaware of acceptable levels of acceleration to the devices.

Despite the need for information regarding electronic device impacts, it is infeasible to implement conventional impact detection techniques in many electronic devices. While some inertial measurement units, high-g accelerometers, or other similar devices are capable of characterizing impacts, these solutions are too expensive to include primarily for impact detection. Furthermore, these devices often consume too much power for use in always-on impact detection. Because always-on impact detection often operates even when the electronic device is off, the increased power consumption of these devices can deplete the battery of the electronic device.

In response to these disadvantages, the inventors have conceived of techniques for detecting and characterizing impacts to electronic devices using saturation data of a low-g accelerometer. Low-g accelerometers are conventionally not used in detecting and characterizing impacts to electronic devices because during impacts accelerations experienced by electronic devices exceed a maximum measurable acceleration for low-g accelerometers. In one non-limiting example, a low-g accelerometer is capable of measuring accelerations up to 16g, while accelerations experienced by a dropped electronic device often far exceed 16g. Impacts are detected based on a saturation duration of the low-g acceleration, wherein the low-g accelerometer is measuring a maximum measurable value *(i.e.,* the low-g accelerometer is "saturated"). A direction of an impact is measured using a sign of an acceleration in one or more axes of the low-g accelerometer. In some embodiments, a rest orientation of the electronic device is determined based on an acceleration in an axis when the impact is determined to have ended.

In some embodiments, a system for detecting impacts to an electronic device using a low-g accelerometer includes an accelerometer, one or more memory devices, and a processor. An acceleration measurement of an axis of the accelerometer indicating that the axis is saturated is obtained. A direction of acceleration in the axis is obtained based on the acceleration measurement. A saturation period for the axis is determined. A determination of whether the saturation period satisfies a duration threshold is made. In response to the saturation period satisfying the duration threshold, an impact is detected and a record of the impact is stored in the one or more memory devices.

While for ease of discussion some embodiments are disclosed in terms of detecting and characterizing impacts to electronic devices, the disclosure is not so limited. In various embodiments, techniques described herein are used to detect and characterize impacts to vehicles, shipping containers, personal protective equipment (PPE) or any other object for which impacts are to be measured.

Moreover, while the term "impact" or "shock" are used herein to refer to events detected according to some embodiments, the disclosure is not necessarily limited to detecting impacts. In various embodiments, any acceleration event including one or more acceleration values outside a measurement range of an accelerometer is characterized. In one non-limiting example, vehicle accelerations that are outside a measurable range of the accelerometer but are not caused by an impact-such as accelerations caused by braking or accelerating-are detected.

As used herein, the term "low-g accelerometer" refers to an accelerometer having a saturation acceleration less than an acceleration to be measured using the accelerometer. Impacts experienced by dropped electronic devices are often on the order of 50g-100g. Thus, a low-g accelerometer in this example is an accelerometer having a saturation acceleration of less than around 50g-100g. In one non-limiting example, a low-g accelerometer has a saturation acceleration of less than 25g, in particular in the range 10g-25g.

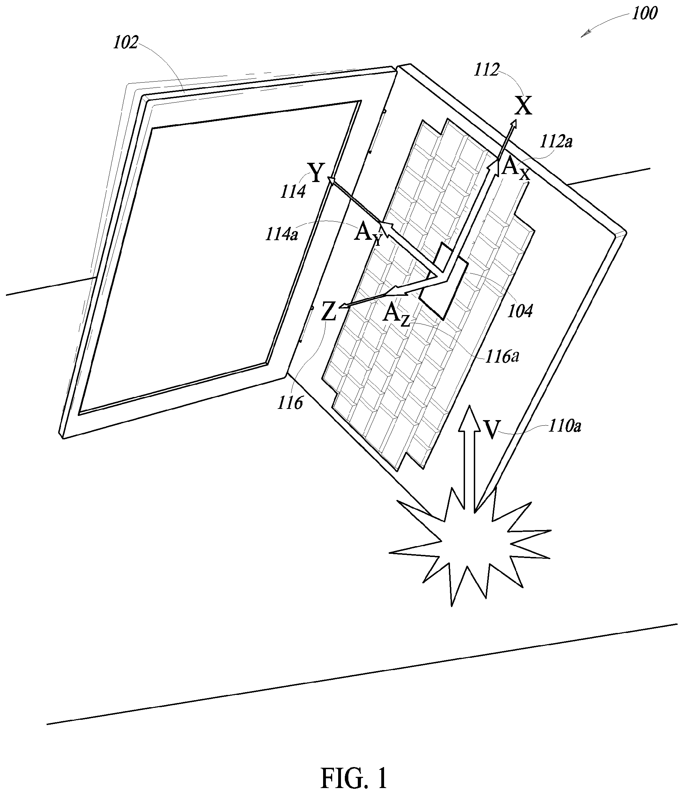

Figure 1 illustrates a use-case diagram 100 for always-on impact detection in an electronic device using saturation data of a low-g accelerometer according to some embodiments.

Use-case diagram 100 includes electronic device 102 experiencing an impact 110a. Laptop 102 includes low-g accelerometer 104. Low-g accelerometer 104 measures X axis acceleration 112a, Y axis acceleration 114a, and Z axis acceleration 116a caused by impact 110a in X axis 112, Y axis 114, and Z axis 116, respectively.

In various embodiments, an impact such as impact 110a is detected based on saturation data of low-g accelerometer 104 in X axis 112, Y axis 114, or both. For example, when X axis acceleration 114a indicates that low-g accelerometer 104 is saturated in X axis 112 for a threshold saturation duration, such as 5 acceleration measurements, an impact in the X axis is detected.

In some embodiments, a direction of the impact is stored when the impact is detected. A record of the direction of the impact is sent to an entity associated with the electronic device such as a user of the electronic device, a distributor of the electronic device, a manufacturer of the electronic device, etc. After impact 110a has ended, a rest orientation of the device is determined based on an acceleration measurement of the low-g accelerometer in the Z axis.

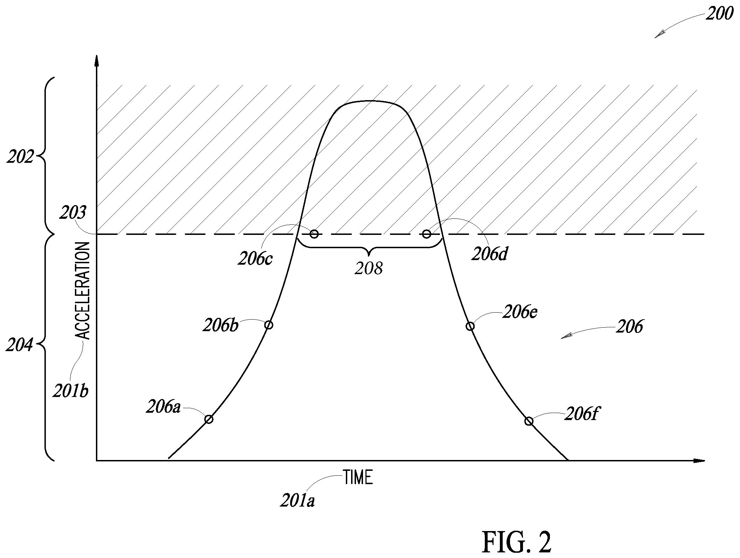

Figure 2 is a graph 200 that illustrates an acceleration curve as measured by a low-g accelerometer for detecting an impact using saturation of the low-g accelerometer according to some embodiments.

Graph 200 includes time axis 201a and acceleration axis 201b.

Acceleration curve 206 represents an acceleration experienced by the low-g accelerometer. Acceleration measurements 206a, 206b, 206c, 206d, 206e, and 206f (collectively, "acceleration measurements 206") are indicated by circles and represent measurements of acceleration curve 206 taken using the low-g accelerometer as it experiences acceleration curve 206.

Saturation acceleration 203 is the saturation acceleration of the low-g accelerometer, which is the highest magnitude acceleration measurable using the low-g accelerometer. The low-g accelerometer produces acceleration measurements equal to or below saturation acceleration 203 in non-saturated accelerations 204 in accordance with acceleration curve 206, such as accelerations 206a, 206b, 206e, and 206f.

For accelerations on acceleration curve 206 that are above saturation acceleration 203 in saturated accelerations 202, low-g accelerometer measures saturation acceleration 203, even though it is experiencing accelerations above saturation acceleration 203. For example, acceleration measurements 206c and 206d are measured to be saturation acceleration 203, despite acceleration curve 206 exceeding saturation acceleration 203 at corresponding times.

Saturation duration (*i.e.,* "saturation period") 208 represents a duration for which the low-g accelerometer is saturated.

In some embodiments, saturation duration 208 is recorded as a number of consecutive acceleration measurements having saturation acceleration 203. In one non-limiting example, as depicted in Fig. 2, saturation duration 208 includes two saturated acceleration measurements: acceleration measurements 206c and 206d. Accordingly, the saturation duration in this example is 2 (acceleration measurements).

In some embodiments, saturation duration 208 is recorded as a duration of time for which the low-g accelerometer measures saturation acceleration 203. For example, assuming low-g accelerometer has an output data rate of 400 Hz, the duration of time for two consecutive saturated samples would be 2 * 1/400 seconds = 5 milliseconds. Thus, in one non-limiting example of embodiments shown in Fig. 2, the saturation duration is stored as 5 (milliseconds). In various embodiments, a number representing the saturation duration corresponds to any unit, such as seconds or microseconds. Therefore, the saturation duration is in various embodiments equivalently represented as 0.005 (seconds), 5000 (microseconds), etc.

Saturation duration 208 is used to detect impacts according to various embodiments. In some embodiments, saturation duration 208 is used to estimate a maximum magnitude of acceleration curve 206. In some embodiments, saturation duration is compared to a threshold saturation value to determine an impact to the electronic device. Various techniques for detecting impacts based on saturation duration 208 are discussed herein.

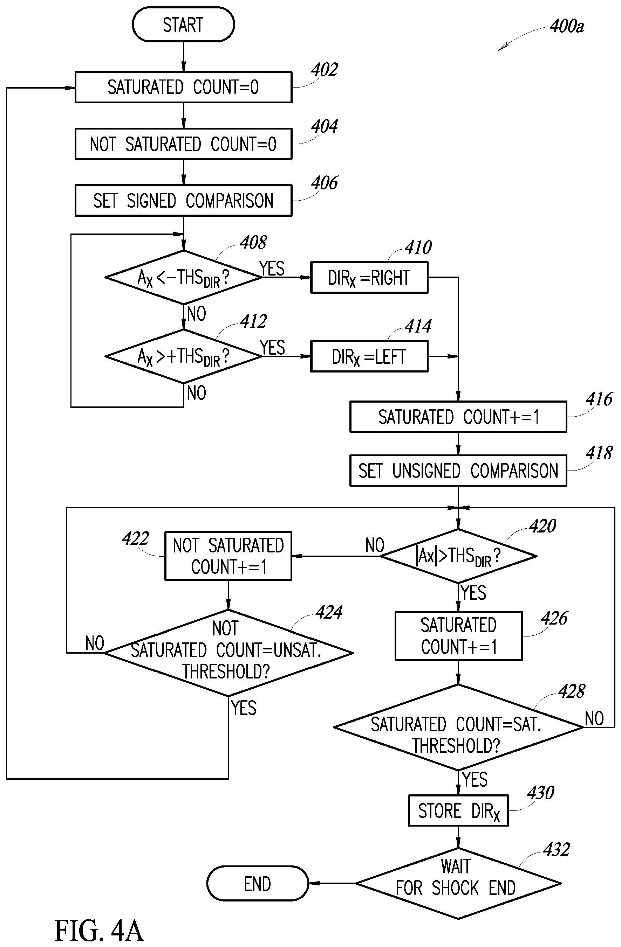

In various embodiments, saturation duration 208 includes one or more acceleration measurements below saturation acceleration 203. In some embodiments, saturation duration 208 ends when a threshold number of accelerations below saturation acceleration 203 are detected. In various embodiments, saturation duration 208 includes or the one or more non-saturated acceleration measurements. For example, when a non-saturated acceleration is detected between acceleration 206c and 206d, the saturation duration is 2 when the non-saturated value is excluded from the saturation duration, or 3 when the non-saturated value is included in the saturation duration. Techniques for handling non-saturated acceleration measurements in the saturation duration are discussed in detail with respect to Figure 4A.

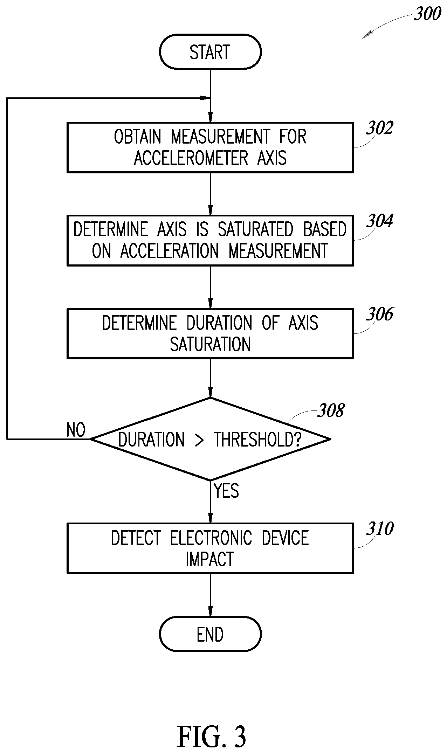

Figure 3 illustrates a logical flow diagram of a process 300 used to detect impacts using saturation data of a low-g accelerometer according to some embodiments.

Process 300 begins, after a start block, at block 302, where an acceleration measurement for an accelerometer axis is obtained. After block 302, process 300 continues to block 304.

At block 304, a determination that the accelerometer axis is saturated based on the acceleration measurement is made. In some embodiments, the determination is made based on a difference between a saturation acceleration of the accelerometer and the measured acceleration. For example, when the acceleration measurement is 16g and the saturation acceleration is 16g, the difference between the acceleration measurement and the saturation acceleration is 0g, indicating that the accelerometer axis is saturated. In some embodiments, the determination is made when the difference between the saturation acceleration and the measured acceleration is within a configurable threshold. In various embodiments, an acceleration measurement within 1%, 5%, or 10% of the saturation acceleration is determined to indicate that the accelerometer axis is saturated. After block 304, process 300 continues to block 306.

At block 306, a saturation duration for the accelerometer axis is determined. In some embodiments, the saturation duration is based on a number of consecutive saturated measurements. In some embodiments, the saturation duration is based on a duration of time for which the saturated measurements are made.

In some embodiments, the saturation duration varies based on an output data rate (ODR) of the low-g accelerometer. In one non-limiting example, when the ODR of the low-g accelerometer is 400 Hz, the saturation duration is 10 samples, whereas when the sampling frequency is 200 Hz, the sampling frequency is 5 samples, despite the duration of time in both examples being the same.

In some embodiments, the saturation duration includes up to a threshold number of non-saturated values. Referring to Fig. 2 as an example, acceleration 206c indicates that the corresponding accelerometer axis is saturated. Acceleration 206d also indicates accelerometer saturation. But accelerations 206e and 206f are below saturation acceleration 203. In some embodiments, when the threshold number of non-saturated values is 1, the saturation duration ends when a first non-saturated acceleration measurement is detected.

In some embodiments, the non-saturated acceleration measurements included in the saturation duration do not contribute to the saturation duration. For example, when the saturation duration includes 5 saturated acceleration measurements and 2 non-saturated acceleration measurements, the saturated duration is 5.

In some embodiments, the non-saturated acceleration measurements included in the saturation duration contribute to the saturation duration. For example, when the saturation duration includes 5 saturated acceleration measurements and 2 non-saturated accelerations, the saturated duration is 7. Determining the saturation duration is discussed in more detail with respect to Figure 4A. After block 306, process 300 continues to block 308.

At block 308, a determination of whether the saturation duration is greater than a threshold duration value is made. If yes, process 300 continues to block 310. If no, process 300 continues to block 302.

In some embodiments, the threshold duration value is based on a characteristic of the electronic device. For example, some laptops that include a hard disk drive might be damaged accelerations having a duration value of 2 samples, while some laptops including a solid-state drive might not be damaged until higher duration values such as 5 samples. Thus, in one non-limiting example, the threshold duration value for the laptop including the hard disk drive is 2 samples, while the threshold duration value for the laptop including the solid-state drive is 5 samples.

In various embodiments, the saturation duration is compared to multiple duration values (not shown). In one non-limiting example, the multiple duration values include a duration value corresponding to a minor impact, such as 1 sample; a duration value corresponding to a moderate impact, such as 2 samples; and a duration value corresponding to a major impact such as 5 samples.

At block 310, an impact is detected. In various embodiments, detection of the impact causes the electronic device to automatically perform one or more diagnostic tests to determine whether the electronic device has been damaged. In some embodiments, the one or more diagnostic tests include a pre-boot diagnostic test, such as a diagnostic test provided through a firmware of the electronic device, a post-boot diagnostic test, or any combination thereof. In various embodiments, the one or more diagnostic tests test any functionality of the electronic device, including a display, peripheral component interconnect express (i.e., "PCIE") bus, hard drive, battery, fan, processor, memory, touchscreen, keyboard, charge port, camera, graphics adapter, etc., or any combination thereof.

In some embodiments, detection of an impact while the electronic device is off causes a pre-boot diagnostic test to be automatically performed when the electronic device is next turned on. In some embodiments, a post-boot diagnostic test is performed when the electronic device is successfully booted. In some embodiments wherein the device is successfully booted, an option to perform a diagnostic test is presented to a user using the electronic device.

In some embodiments, a record of the detected impact is stored using a memory of the electronic device, such as a hard drive. In some embodiments, a record of the detected impact is stored using a memory of the low-g accelerometer, such as a first-in-first-out (FIFO) memory of the low-g accelerometer. When a record of the detected impact is stored using a memory of the low-g accelerometer, the record of the detected impact is copied to the memory of the electronic device when the electronic device is turned on.

In some embodiments, a record of the detected impact is sent to a server accessible to an entity associated with the electronic device, such as a manufacturer, retailer, owner, etc. of the electronic device. In one non-limiting example, when the electronic device is not in communication with the server when the impact is detected, a record of the detected impact is stored locally at the electronic device. The electronic device then sends data regarding the detected impact to the entity associated with the electronic device when the electronic device establishes communication with the server. In various embodiments, diagnostic test results collected in response to detecting the impact are stored with the detected impact in memory. In some embodiments, the diagnostic test results are sent with a record of the detected impact.

In some embodiments, detection of an impact causes the electronic device to display a notification to the user using a display in communication with the electronic device. In some embodiments, the notification is based on results of a diagnostic test. In one non-limiting example, the notification displays statuses of various components of the electronic device as determined by the diagnostic test.

In some embodiments, detection of the impact causes the electronic device to produce an output. In some embodiments, the output includes sound or light. In one non-limiting example, the electronic device produces audio output indicating a severity of the detected impact.

In various embodiments, process 300 is used to periodically obtain an acceleration measurement of the low-g accelerometer. In one non-limiting example, process 300 is periodically performed at a frequency corresponding to an output data rate (ODR) of the low-g accelerometer such as 200 Hz, 400 Hz, 800 Hz, etc.

Figure 4a illustrates a logical flow diagram of a process used to detect a direction of an object when an impact is detected using saturation of a low-g accelerometer according to some embodiments. Process 400a is discussed in terms of determining an impact (i.e., a "shock") in the X-axis of the low-g accelerometer. Referring to Fig. 1, in some embodiments, process 400a is used to detect a direction of an object when an impact is detected in X axis 112.

Process 400a begins, after a start block, at block 402, where a saturated count is reset. The saturated count is used to track a number of saturated acceleration measurements. In some embodiments, resetting the saturated count includes setting the saturated count to zero. After block 402, process 400a continues to block 404.

At block 404, a not saturated count is reset. The not saturated count is used to track a number of non-saturated acceleration measurements. In some embodiments, resetting the not saturated count includes setting the not saturated count to zero. After block 404, process 400a continues to block 406.

At block 406, a signed comparison is set. The signed comparison is used to compare a first acceleration measurement to threshold accelerations. After block 406, process 400a continues to block 408.

At decision block 408, a determination is made whether the first acceleration measurement is less than a negative threshold acceleration. If yes, process 400a continues from decision block 408 to block 410. If no, process 400a continues from decision block to block 412.

At block 410, the direction of acceleration in the X-axis is set to "right," indicating that the device is experiencing a potential impact on a side designated "right." In some embodiments, setting the direction of acceleration in the X-axis to "right" includes setting a bit in memory to 0 or 1. After block 410, process 400a continues to block 416.

At decision block 412, a determination is made whether the first acceleration measurement is greater than a positive threshold acceleration. If yes, process 400a continues from decision block 412 to block 414. If no, process 400a continues from decision block 412 to block 408.

In some embodiments, the positive threshold acceleration, the negative threshold acceleration, or both, is based on a saturation acceleration of the low-g accelerometer in the X-axis. In some embodiments, the positive threshold acceleration and the negative threshold acceleration have a same magnitude. In one non-limiting example, when the saturation acceleration of the low-g accelerometer is 16g, the negative threshold acceleration is -16g. In some embodiments, the positive threshold acceleration and the negative threshold acceleration have different magnitudes.

At block 414, the direction of acceleration in the X-axis is set to "left," indicating that the device is experiencing a potential impact on a side designated "left." In some embodiments, setting the direction of acceleration in the X-axis includes setting a bit in memory to 0 or 1. After block 414, process 400a continues to block 416.

At block 416, the saturated count is incremented to reflect the determination made at decision block 408 or decision block 412 that the first acceleration satisfies the relevant threshold. After block 416, process 400a continues to block 418.

At block 418, an unsigned comparison is set. The unsigned comparison is used to compare a magnitude of a second acceleration to the positive threshold acceleration. Because the direction of the impact is recorded at block 410 or block 414, it is often not necessary to further differentiate between acceleration directions. Using an unsigned comparison enables the magnitude of the second acceleration to be compared to a single positive acceleration threshold, instead of comparing the signed second acceleration to both a positive acceleration threshold and a negative acceleration threshold.

In some embodiments, however, a signed comparison is set. When a signed comparison is set, process 400a compares the signed second acceleration to both positive and negative values of the threshold acceleration. After block 418, process 400a continues to block 420.

At decision block 420, a determination of whether the magnitude of a second acceleration measurement is greater than the acceleration threshold is made. If yes, process 400a continues from decision block 420 to block 426. If no, process 400a continues from decision block 420 to block 422.

At block 422, the not saturated count is incremented to reflect the determination made at decision block 420 that the second acceleration does not indicate that the low-g accelerometer is saturated. After block 422, process 400a continues to decision block 424.

At decision block 424, a determination of whether the not saturated count equals a not saturated count threshold. If yes, process 400a continues from block 424 to block 402. If no, process 400a continues from block 424 to block 420. In some embodiments, the not saturated threshold is manually configurable. Typically, the not saturated value is a value between 1 and 10; but the disclosure is not so limited. In various embodiments, the not saturated threshold is any value.

At block 426, the saturated count is incremented to reflect the determination made at decision block 420 that the low-g accelerometer is saturated. After block 426, process 400a continues to block 428.

At block 428, a determination of whether the saturated count satisfies the saturation count threshold is made. If yes, process 400a continues to block 430. After block 428, process 400a continues to block 430. If no, process 400a continues to decision block 420.

At block 430 the direction of the acceleration determined at either block 410 or block 414 is stored. In some embodiments, the direction of acceleration is stored using a memory associated with the low-g accelerometer, such as an integrated memory of the low-g accelerometer. In some embodiments, the direction of acceleration is stored using a memory of an electronic device in which the accelerometer is included. After block 430, process 400a continues to block 432.

At decision block 432, process 400a determines that the impact has ended. In various embodiments, determining that the impact is ended includes determining a stationarity of the electronic device. If the device is stationary, for example, the device is experiencing acceleration below a threshold acceleration value, the impact is determined to have ended.

In some embodiments, the determination that the impact has ended is made based on calculating an acceleration norm based on an acceleration measurement of each axis of the 3-axis accelerometer and comparing the acceleration norm to a threshold acceleration norm. For example, a measurement of each of the 3-axis accelerometer is obtained such as 5g in the X axis, 5g in the Y axis, and 5g in the Z axis. In this example, the norm is $\sqrt{5^2 + 5^2 + 5^2} = 5\sqrt{3}$. This norm is then compared to a threshold acceleration norm to determine whether the impact has ended.

When the accelerometer norm signal is less than a threshold acceleration norm, the impact is determined to have ended. In various embodiments, the threshold acceleration norm is 1g, 5g, 10g, etc. In some embodiments, the threshold acceleration norm is selected so that an orientation of the accelerometer is unlikely to change after the impact is determined to have ended. In one non-limiting example, if the threshold acceleration norm is around 1g-5g, the electronic device does not have sufficient energy to bounce, tumble, flip, etc. such that it comes to rest in an orientation different from that determined when the impact has ended. Thus, the orientation determined when the impact has ended likely reflects a rest orientation of the electronic device.

In various embodiments, the impact is determined to end when a high-pass-filtered accelerometer norm signal is less than threshold acceleration norm. In some embodiments, the accelerometer norm signal is filtered using a high-pass filter with a cut-off around 1 Hz to 10 Hz. In some embodiments, the high-pass filter is a diff filter.

While the end of the impact is described as being determined using a norm signal of the low-g accelerometer, the disclosure is not so limited. In various embodiments, any combination of measurements taken using the low-g accelerometer, such as an arithmetic mean, geometric mean, harmonic mean, median, moving average, quadratic mean, etc. is used to determine the end of the impact. In some embodiments, the impact is determined to end when no measurement axis of the low-g accelerometer is above an acceleration threshold.

In various embodiments, the end of the impact is determined when an acceleration measurement of the electronic device is below a threshold for a threshold amount of time. In one non-limiting example, the impact is determined to end when a moving average of the acceleration values in each axis of the low-g accelerometer is below 3g for at least 0.5 seconds. In another non-limiting example, the impact is determined to end when the high-pass filtered accelerometer norm signal is less than 0.05 g for at least 0.5 seconds. In various embodiments, the threshold of time is between 0 seconds to 1 second. After block 432, process 400a ends at an end block.

While process 400a is described in terms of detecting the directions of impacts in the X axis of the low-g accelerometer, in various embodiments, processes similar to process 400a are used to detect the directions of impacts in other axes of the low-g accelerometer. In one non-limiting example, impacts in the Y axis of the low-g accelerometer are detected and the acceleration direction recorded. While impacts in the X axis are classified as "left" or "right" at block 410 or block 414, impacts in the Y axis are classified as "front" or "back" at block 410 or block 414. Referring to Figure 1, impact 110a is on the front left corner. A determination that impact 110a is on the front left corner is made when a "left" impact is detected on the X axis and a "front" impact is detected on the Y-axis.

In some embodiments, an impact on the left edge of the electronic device is detected when the X axis acceleration is greater than a positive threshold acceleration for a threshold saturation duration.

In some embodiments, an impact on the right edge of the electronic device is detected when the X axis acceleration is less than a negative threshold acceleration for a threshold saturation duration.

In some embodiments, an impact on the front edge of the electronic device is detected when the Y axis acceleration is greater than a positive threshold acceleration for a threshold saturation duration.

In some embodiments, an impact on the back edge of the electronic device is detected when the Y axis acceleration is less than a negative threshold acceleration for a threshold saturation duration.

In some embodiments, an impact on the left-front edge of the electronic device is detected when the X axis acceleration is greater than a positive threshold acceleration for a threshold saturation duration and the Y axis acceleration is greater than a positive threshold acceleration for a threshold saturation duration.

In some embodiments, an impact on the right-front edge of the electronic device is detected when the X axis acceleration is less than a negative threshold acceleration for a threshold saturation duration and the Y axis acceleration is greater than a positive threshold acceleration for a threshold saturation duration.

In some embodiments, an impact on the left-back edge of the electronic device is detected when the X axis acceleration is greater than a positive threshold acceleration for a threshold saturation duration and the Y axis acceleration is less than a negative threshold acceleration for a threshold saturation duration.

In some embodiments, an impact on the right-back edge of the electronic device is detected when the X axis acceleration is less than a negative threshold acceleration for a threshold saturation duration and the Y axis acceleration is less than a negative threshold acceleration for a threshold saturation duration.

In various embodiments, the threshold acceleration has a magnitude of around 10g-20g. In various embodiments, the threshold saturation duration is around 5-10 samples when the output data rate (ODR) is set to 800 Hz. In various embodiments, the threshold accelerations, threshold saturation durations, or both, used with respect to each of the axes are the same or different.

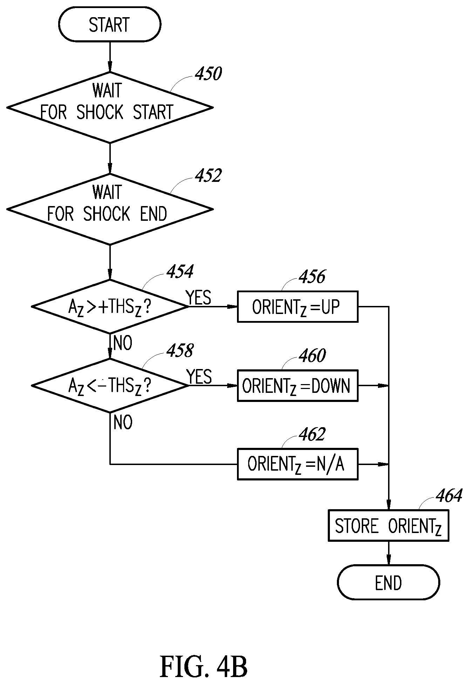

Figure 4b illustrates a logical flow diagram of a process 400b used to detect an orientation of an object when a detected impact ends according to some embodiments. In various embodiments, process 400b is performed while process 400a is being performed. Because many electronic devices such as laptops have a relatively small dimension in the Z axis, such as a fraction of an inch, but relatively large dimensions in the X axis and the Y axis, such as several inches, the electronic device is very likely to come to rest in an X-Y plane rather than an X-Z plane or a Y-Z plane. In other words, electronic devices such as laptops typically come to rest in an orientation with a screen facing up or a screen facing down, rather than balanced on a thin side. Accordingly, in some embodiments an accelerometer in the Z axis is used to determine whether the electronic device comes to rest in a screen-up or a screen-down orientation.

Process 400b begins, after a start block, at decision block 450, where a determination whether the shock has started is made. If the shock has not started, block 450 self-loops (not shown). If the shock has started, process 400a continues to decision block 452. In some embodiments, the shock is determined to start when an acceleration measurement of the low-g accelerometer exceeds a threshold start acceleration. In various embodiments, the threshold start acceleration is the same or different than a threshold acceleration discussed with respect to decision block 408, 412, or 420 of Fig. 4A.

At decision block 452, a determination whether the shock has ended is made. In various embodiments, decision block 452 employs embodiments of decision block 432 of Fig. 4A to determine whether the shock has ended. In various embodiments, however, decision block 452 includes a different threshold acceleration than that employed by decision block 432. In one non-limiting example, decision block 432 uses a lower threshold acceleration than decision block 432. If the shock has ended, process 400a continues to decision block 454. If the shock has not ended, block 454 self-loops (not shown).

At decision block 454, a determination is made whether a Z axis acceleration is greater than a positive acceleration threshold. If yes, process 400b continues from decision block 454 to block 456. If no, process 400b proceeds from decision block 456 to decision block 458.

At block 456, an orientation in the Z-axis is set to "up," indicating that the rest orientation of the device is "up." After block 456, process 400b continues to block 464.

At decision block 458, a determination is made whether a Z axis acceleration is less than a negative acceleration threshold. If yes, process 400b continues from decision block 458 to block 460. If no, process 400b proceeds from decision block 458 to block 462.

At block 460, an orientation in the Z-axis is determined to be "down," indicating that the rest orientation of the device is "down." After block 460, process 400b continues to block 464.

At block 462, the orientation in the Z-axis is determined to be "N/A," indicating that the rest orientation is uncertain. After block 462, process 400b continues to block 464.

At block 464, the orientation in the Z axis is stored. In various embodiments, the orientation in the Z axis is stored locally in a memory of the electronic device, transmitted to an entity associated with the electronic device, etc. as described herein. In some embodiments, the orientation in the Z axis is stored or sent separately from the impact information described with respect to Figure 4A. In some embodiments, the orientation in the Z axis is stored or sent with the impact information described with respect to Figure 4A.

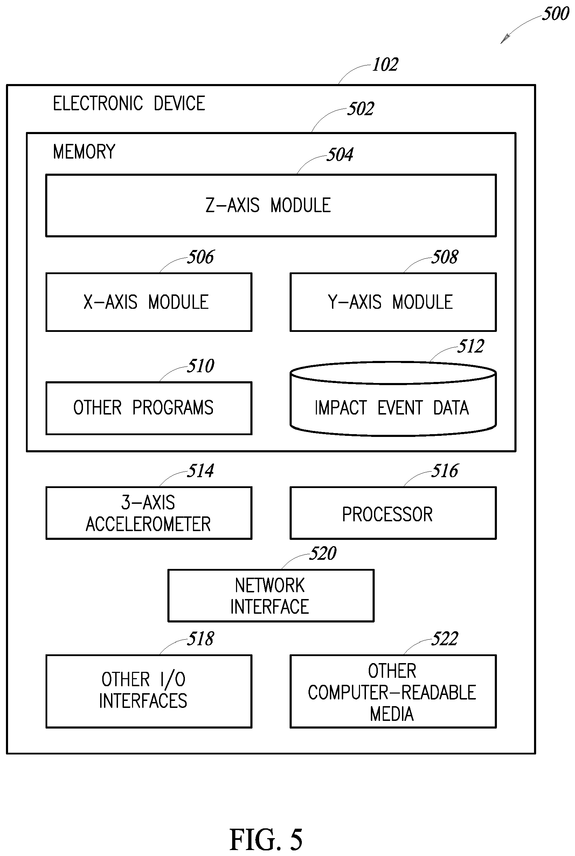

Figure 5 illustrates a system diagram showing an example computing system 500 for implementing embodiments described herein.

Computing system 500 includes electronic device 102. In various embodiments, electronic device 102 is a laptop computer, cell phone, or other mobile user device. In some embodiments, electronic device 102 is a monitoring device configured to monitor acceleration of a parcel, shipping container, vehicle, personal protective equipment, etc.

Electronic device 102 includes memory 502, 3-axis accelerometer 514, process 516, network interface 520, other I/O interfaces 518, and other computer-readable media 522.

In various embodiments, memory 502 comprises one or more various types of nonvolatile or volatile storage technologies. Examples of memory 502 include, but are not limited to, flash memory, hard disk drives, optical drives, solid-state drives, various types of random-access memory ("RAM"), various types of read-only memory ("ROM"), other computer-readable storage media (also referred to as processor-readable storage media), or other memory technologies, or any combination thereof. Memory 502 is utilized to store information, including computer-readable instructions that are utilized by processor 516 to perform actions, including at least some embodiments described herein.

In various embodiments, memory 502 stores Z-axis module 504, X-axis module 506, and Y-axis module 508. In various embodiments, X-axis module 506 and Y-axis module 508 employs embodiments of process 400a of Figure 4A to detect a direction of electronic device 102 when an impact to device 102 is detected. In various embodiments, Z-axis module 504 employs embodiments of process 400b of Figure 4B to determine a rest orientation of device 102 following the end of a detected impact.

In some embodiments, memory 502 stores other programs 510 such as operating systems, user applications, or other computer programs. In some embodiments, memory 502 stores impact event data 512, which includes data associated with detected impacts, such as impact directions determined using embodiments of process 400a of Figure 4A and rest orientations determined using embodiments of process 400b of Figure 4B.

In some embodiments, computing system 500 includes other computing devices such as a server, a user device, etc. (not shown). In some embodiments, the other computing devices include components similar to those described with respect to electronic device 502, such as memory, a processor, etc. In one non-limiting example, computing system 500 includes a server accessible to an entity associated with electronic device 102 that receives data regarding impacts detected using electronic device 102 as described herein.

As discussed herein, 3-axis accelerometer 514 is a low-g accelerometer. While 3-axis accelerometer 514 is depicted as a separate component of electronic device 102, in various embodiments 3-axis accelerometer 514 includes one or more components of electronic device 102. In one non-limiting example, 3-axis accelerometer 514 includes memory 502, processor 516, etc., or any combination thereof, such as on a same chip of the 3-axis accelerometer or in a same package as the 3-axis accelerometer.

While the accelerometer is referred to herein as a "3-axis" accelerometer, the disclosure is not so limited. In various embodiments, the accelerometer is included in an inertial measurement unit (IMU) having three or more axes. Furthermore, in some embodiments, the accelerometer includes multiple accelerometers, such as three 1-axis accelerometers.

Processor 516 includes one or more processors, processing units, programmable logic, circuitry, or other computing components that are configured to perform embodiments described herein or to execute computer instructions to perform embodiments described herein. In some embodiments, processor 516 includes a single processor that operates individually to perform actions. In some embodiments, processor 516 includes a plurality of processors that operate to collectively perform actions, such that one or more processors operate to perform some, but not all, of such actions.

In some embodiments, other I/O interfaces 518 include interfaces for various other input or output devices, such as audio interfaces, other video interfaces, USB interfaces, physical buttons, keyboards, haptic interfaces, tactile interfaces, or the like.

Network interface 520 is configured to communicate with other computing devices, such as user computing devices, via a communication network. In some embodiments, network interface 520 includes transmitters and receivers (not illustrated) to communicate with other computing devices.

In some embodiments, other computer-readable media 522 includes other types of stationary or removable computer-readable media, such as removable flash drives, external hard drives, or the like.

A system of the present disclosure includes: an accelerometer; one or more memory devices; and one or more processors configured to: obtain an acceleration measurement of an axis of the accelerometer that indicates that the axis is saturated; obtain a direction of acceleration in the axis based on the acceleration measurement; determine a saturation period for the axis; determine whether the saturation period satisfies a duration threshold; and in response to the saturation period satisfying the duration threshold: detect an impact and store a record of the detected impact in the one or more memory devices.

In some embodiments, the one or more processors determine the saturation period by being further configured to determine a number of consecutive acceleration measurements for which the axis is saturated, and wherein the duration threshold comprises a threshold number of acceleration measurements.

In some embodiments, the one or more processors determine the saturation period by being further configured to determine a duration of time for which acceleration measurements of the axis are saturated, and wherein the duration threshold comprises a threshold period of time.

In some embodiments, the one or more processors determine the saturation period by being further configured to determine the saturation period that includes less than a threshold number of non-saturated acceleration measurements.

In some embodiments, the one or more processors are further configured to determine the saturation period, wherein the axis is not saturated for an acceleration measurement in the saturation period.

In some embodiments, the accelerometer is a 3-axis accelerometer that includes a first axis, a second axis, and a third axis, wherein two axes of the 3-axis accelerometer are used to detect the impact, and a third axis of the 3-axis accelerometer is used to determine a rest orientation after the impact.

In some embodiments, the one or more processors are further configured to: determine that the impact has ended; obtain an orientation acceleration measurement via the accelerometer; and calculate a rest orientation based on the orientation acceleration measurement.

In some embodiments, the one or more processors are further configured to: determine an average acceleration based on a measurement of each axis of the accelerometer; determine that the impact has ended when the average acceleration is less than a threshold acceleration value; in response to the determination that the impact has ended, obtain an orientation acceleration measurement of the accelerometer; and calculate a rest orientation based on the orientation acceleration measurement.

In some embodiments, the one or more processors are further configured to: periodically determine an average acceleration based on a measurement of each axis of the accelerometer; determine that the impact has ended when the average acceleration is less than a threshold acceleration value for a threshold duration of time; in response to the determination that the impact has ended, obtain an orientation acceleration measurement of the accelerometer; and calculate a rest orientation based on the orientation acceleration measurement; and store the rest orientation in the one or more memory devices.

In some embodiments, the one or more processors are further configured to store the rest orientation associated with the detected impact in the one or more memory devices.

In some embodiments, a full scale range of the accelerometer has a saturation value of less than 25g.

In some embodiments, the system further includes an inertial measurement unit (IMU) that includes the accelerometer.

In some embodiments, the accelerometer includes at least one of the one or more memory devices and at least one of the one or more processors.

A method of the present disclosure includes: obtaining an acceleration measurement of an accelerometer of an electronic device, the acceleration measurement indicating that an axis of the accelerometer is saturated; determining a direction of acceleration in the axis based on the acceleration measurement; determining a saturation period for the axis; in response to the saturation period satisfying a duration threshold, storing in a memory a record of an impact and of the direction of acceleration to the electronic device.

In some embodiments, determining the saturation period includes determining a set of consecutive acceleration measurements in the axis that includes less than a threshold number of non-saturated acceleration measurements.

In some embodiments, determining the saturation period includes determining a number of acceleration measurements for which less than a threshold number of non-saturated acceleration measurements in the axis are obtained.

In some embodiments, the method further includes: determining that the impact has ended; calculating a rest orientation of the electronic device based on an orientation acceleration measurement of the accelerometer; and storing the rest orientation with the record of the impact.

In some embodiments, the method further includes: calculating an acceleration norm based on a measurement of each axis of the accelerometer; determining that the impact has ended when the acceleration norm is less than a threshold acceleration norm; calculating a rest orientation of the electronic device based on an orientation measurement of the accelerometer; and storing the rest orientation of the electronic device.

A laptop of the present disclosure includes: an accelerometer configured to operate while the laptop is off; a memory device configured to store impact events while the laptop is off; a processor configured to operate while the laptop is off, and configured to: receive, via the accelerometer, acceleration measurements; determine an impact event of the laptop based on whether the acceleration measurements indicate that an axis of the accelerometer is saturated for a threshold duration; and store a record of the impact event in the memory device.

In some embodiments, the processor is a first processor, and the laptop further includes: a second processor configured to: obtain data regarding the impact event via the memory device; and provide an impact notification based on the data regarding the impact event to a computing device accessible to an entity associated with the laptop.

The various embodiments described above can be combined to provide further embodiments. All of the U.S. patents, U.S. patent application publications, U.S. patent applications, foreign patents, foreign patent applications and non-patent publications referred to in this specification and/or listed in the Application Data Sheet are incorporated herein by reference, in their entirety. Aspects of the embodiments can be modified, if necessary to employ concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

**Claims**

1. A system comprising:

   an accelerometer (514), in particular wherein a full scale range of the accelerometer (514) has a saturation value of less than 25g;
   one or more memory devices (502); and
   one or more processors (516) configured to:

      obtain (302) an acceleration measurement of an axis of the accelerometer that indicates that the axis is saturated;
      obtain a direction of acceleration in the axis based on the acceleration measurement;
      determine (306) a saturation period for the axis;
      determine (308) whether the saturation period satisfies a duration threshold; and
      in response to the saturation period satisfying the duration threshold:

         detect (310) an impact; and
         store a record (512) of the detected impact and the of the direction of acceleration in the one or more memory devices.

2. The system of claim 1, wherein the one or more processors (516) are configured to determine the saturation period by being further configured to determine a number of consecutive acceleration measurements for which the axis is saturated, and wherein the duration threshold comprises a threshold number of acceleration measurements.

3. The system of claim 1, wherein the one or more processors (516) are configured to determine the saturation period by being further configured to determine a time period for which acceleration measurements of the axis are saturated, and wherein the duration threshold comprises a threshold time period.

4. The system of claim 1, wherein the one or more processors (516) are configured to determine the saturation period by being further configured to determine the saturation period that includes less than a threshold number of non-saturated acceleration measurements.

5. The system of claim 1, wherein the one or more processors (516) are configured to:
   determine the saturation period for the axis, wherein the axis is not saturated for an acceleration measurement in the saturation period.

6. The system of anyone of the preceding claims, wherein the accelerometer (514) is a 3-axis accelerometer that includes the first axis, a second axis, and a third axis, wherein two axes of the 3-axis accelerometer are used to detect the impact, and a third axis of the 3-axis accelerometer is used to determine a rest orientation after the impact.

7. The system of anyone of the preceding claims, wherein the one or more processors (516) are further configured to:

   determine that the impact has ended;
   obtain an orientation acceleration measurement via the accelerometer; and
   calculate a rest orientation based on the orientation acceleration measurement.

8. The system of anyone of claims 1-7, wherein the one or more processors (516) are further configured to:

   determine an average acceleration based on a measurement of each axis of the accelerometer;
   determine that the impact has ended when the average acceleration is less than a threshold acceleration value;
   in response to the determination that the impact has ended, obtain an orientation acceleration measurement of the accelerometer; and
   calculate a rest orientation based on the orientation acceleration measurement.

9. The system of anyone of claims 1-7, wherein the one or more processors (516) are further configured to:

   determine an average acceleration based on a measurement of each axis of the accelerometer;
   determine that the impact has ended when the average acceleration is less than a threshold acceleration value for a threshold period of time;
   in response to the determination that the impact has ended, obtain an orientation acceleration measurement of the accelerometer;
   calculate a rest orientation based on the orientation acceleration measurement; and
   store the rest orientation in the one or more memory devices, in particular store the rest orientation associated with the detected impact in the one or more memory devices.

10. A method (300) comprising the steps of:

    obtaining (302) an acceleration measurement of an accelerometer of an electronic device, the acceleration measurement indicating that an axis of the accelerometer is saturated;
    determining (304) a direction of acceleration in the axis based on the acceleration measurement;

determining (306) a saturation period for the axis;
in response to the saturation period satisfying a duration threshold (308), storing in a memory, a record (512) of an impact and of the direction of acceleration to the electronic device.

11. The method of claim 10, wherein determining the saturation period comprises:

    determining a set of consecutive acceleration measurements in the axis that includes less than a threshold number of non-saturated acceleration measurements;
    alternatively:
    wherein determining the saturation period comprises:
    determining a number of acceleration measurements for which less than a threshold number of non-saturated acceleration measurements in the axis are obtained.

12. The method of claim 10 or 11, the method further comprising the steps of:

    determining that the impact has ended;
    calculating a rest orientation of the electronic device based on an orientation acceleration measurement of the accelerometer; and
    storing the rest orientation with the record of the impact.

13. The method of anyone of claims 10-12, the method further comprising the steps of:

    calculating an acceleration norm based on a measurement of each axis of the accelerometer;
    determining that the impact has ended when the acceleration norm is less than a threshold acceleration norm;
    calculating a rest orientation of the electronic device based on an orientation measurement of the accelerometer; and
    storing the rest orientation of the electronic device.

14. A laptop (102) comprising:

    an accelerometer (514) configured to operate while the laptop is off;
    a memory device (502) configured to store impact events while the laptop is off;
    a first processor (516) configured to operate while the laptop is off, and configured to:

       receive (302), via the accelerometer, acceleration measurements;
       determine (304) an impact event of the laptop based on whether the acceleration measurements indicate that an axis of the accelerometer is saturated for a threshold duration (306, 308); and
store a record (512) of the impact event in the memory device.

15. The laptop of claim 14, further comprising:
a second processor configured to:

obtain data regarding the impact event via the memory device; and
provide an impact notification based on the data regarding the impact event to a computing device (500) accessible to an entity associated with the laptop.

FIG. 1

FIG. 2

*300*

```
          ┌─────────────┐
          │    START    │
          └──────┬──────┘
                 │
                 ▼
    ┌────────────────────────────┐   302
    │   OBTAIN MEASUREMENT FOR   │
    │     ACCELEROMETER AXIS     │
    └──────────────┬─────────────┘
                   │
                   ▼
    ┌────────────────────────────┐   304
    │ DETERMINE AXIS IS SATURATED │
    │ BASED ON ACCELERATION       │
    │ MEASUREMENT                 │
    └──────────────┬─────────────┘
                   │
                   ▼
    ┌────────────────────────────┐   306
    │  DETERMINE DURATION OF AXIS │
    │         SATURATION         │
    └──────────────┬─────────────┘
                   │
                   ▼
   NO      ╱◇◇◇◇◇◇◇◇◇◇◇◇◇◇◇╲      308
  ◄────── ◇ DURATION > THRESHOLD? ◇
          ╲◇◇◇◇◇◇◇◇◇◇◇◇◇◇◇╱
                   │ YES
                   ▼
    ┌────────────────────────────┐   310
    │   DETECT ELECTRONIC DEVICE  │
    │           IMPACT            │
    └──────────────┬─────────────┘
                   │
                   ▼
          ┌─────────────┐
          │     END     │
          └─────────────┘
```

FIG. 3

*400a*

```
          ┌─────────┐
          │  START  │
          └────┬────┘
               │
        ┌──────▼──────────────────┐  402
        │  SATURATED  COUNT=0     │
        └──────┬──────────────────┘
               │
        ┌──────▼──────────────────┐  404
        │  NOT SATURATED  COUNT=0 │
        └──────┬──────────────────┘
               │
        ┌──────▼──────────────────┐  406
        │  SET SIGNED  COMPARISON │
        └──────┬──────────────────┘
```

408  $A_X < -THS_{DIR}$?  —YES→  410  $DIR_X$ =RIGHT

NO

412  $A_X > +THS_{DIR}$?  —YES→  414  $DIR_X$ =LEFT

NO

416  SATURATED  COUNT+=1

418  SET UNSIGNED  COMPARISON

420  $|A_X| > THS_{DIR}$?  —NO→  422  NOT  SATURATED  COUNT+=1

YES

426  SATURATED  COUNT+=1

424  NOT  SATURATED COUNT=UNSAT. THRESHOLD?  —NO / YES

428  SATURATED  COUNT=SAT. THRESHOLD?  —NO

YES

430  STORE  $DIR_X$

432  WAIT  FOR SHOCK END

END

## FIG. 4A

START

WAIT
FOR SHOCK START    *450*

WAIT
FOR SHOCK END    *452*

*454*
$A_Z > +THS_Z$?    —YES→    $ORIENT_Z = UP$    *456*

↓NO

*458*
$A_Z < -THS_Z$?    —YES→    $ORIENT_Z = DOWN$    *460*

↓NO

$ORIENT_Z = N/A$    *462*

STORE $ORIENT_Z$    *464*

END

FIG. 4B

*500*

ELECTRONIC DEVICE — *102*

MEMORY — *502*

Z-AXIS MODULE — *504*

X-AXIS MODULE — *506*

Y-AXIS MODULE — *508*

OTHER PROGRAMS — *510*

IMPACT EVENT DATA — *512*

3-AXIS ACCELEROMETER — *514*

PROCESSOR — *516*

NETWORK INTERFACE — *520*

OTHER I/O INTERFACES — *518*

OTHER COMPUTER-READABLE MEDIA — *522*

FIG. 5

# EUROPEAN SEARCH REPORT

**Application Number**

EP 25 19 7369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 232631 A (FUJITSU LTD) 2 October 2008 (2008-10-02) * the whole document * | 1-15 | INV. G01P15/08 |
| A | JP 2009 036782 A (HITACHI METALS LTD) 19 February 2009 (2009-02-19) * the whole document * | 1-15 | ADD. G01P15/18 G01P1/12 G01P15/04 G06F11/30 |
| A | JP H09 52569 A (NIPPON ENKAKU SEIGYO KK) 25 February 1997 (1997-02-25) * the whole document * | 1-15 | |

**TECHNICAL FIELDS SEARCHED (IPC)**

G01P
G06F

The present search report has been drawn up for all claims

| Place of search | Date of completion of the search | Examiner |
|---|---|---|
| Munich | 12 January 2026 | Springer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7369

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2026

| Patent document cited in search report | Publication date | Patent family member(s) | Publication date |
|---|---|---|---|
| JP 2008232631 A | 02-10-2008 | JP 5157205 B2<br>JP 2008232631 A | 06-03-2013<br>02-10-2008 |
| JP 2009036782 A | 19-02-2009 | NONE | |
| JP H0952569 A | 25-02-1997 | NONE | |

EPO FORM P0459

For more details about this annex : see Official Journal of the European Patent Office, No. 12/82